# EUROPEAN PATENT SPECIFICATION

(11) **EP 1 373 013 B1**
(45) Date of publication and mention of the grant of the patent: **08.02.2006**
(21) Application number: 02700911.7
(22) Date of filing: 25.02.2002
(51) Int. Cl.: B60N 2/48

(54) **NON-STOP-ACTIVE CAR HEADREST**
AKTIVE FAHRZEUGKOPFSTÜTZE
APPUI-TETE DE VOITURE A ACTION ININTERROMPUE

(30) Priority: 21.03.2001 PL 34662801
(43) Date of publication of application: 02.01.2004
(73) Proprietor: Myslowski, Wlodzimierz, 43-300 Bielsko-Biala (PL)
(72) Inventor: Myslowski, Wlodzimierz, 43-300 Bielsko-Biala (PL)
(74) Representative: Hoffmeister, Helmut
(86) International application number: PCT/PL2002/000015
(87) International publication number: WO 2002/074578

(56) References cited:
- WO-A-98/30412
- DE-A- 19 910 427
- US-A- 4 890 885
- US-A- 5 556 169

## Description

The object of the invention is a non-stop-active car headrest, used as additional head upport in seats, particularly in cars.
So far, headrest solutions, particularly in cars, have allowed for a stepless or gradual adjustment of head support inclination and for the adjustment of its mounting height in the car seat. Due to the connection with the car seat, the headrests adjust to the shape of car seats rather than to the shape of drivers or passengers' heads, which allows for a gap between the head and the headrest positions, and provides only a pointwise or linear head support, which makes their use uncomfortable and does not prevent cervical backbone injuries in case of people whose cars have been run into from the back. Recently, Opel introduced intelligent headrests, based on complex inertial systems, and designed to protect the backbones of car travellers. The design of these headrests aims at allowing them to move quickly, irrespective of the direction of the collision, towards the front of the vehicle, along the car seat longitudinal axis, until a confident head support is achieved. The solutions known so far have only been useful in case of vehicle collisions.

US-A-4890885 (corresponding to the preamble of claim 1) discloses a seat for a vehicle, aircraft or the like which includes a seat part and a backrest whereby the backrest is provided with an integrated headrest. A continuously changeable vacuum cushion is arranged at the backrest within the area of the headrest which is adapted to be individually matched to the cervical vertebrae column-lordosis of the respective seat user by means of an extraction pump and at least one valve. The headrest is arranged in such manner that the area of the cervical vertebrae column-lordosis of the respective seat passenger is effectively supported during the driving operation. However, the headrest may not necessarily always be in contact with the seat passengers' head due to the stiffness of the headrest.

The purpose of the invention is to devise a headrest design, which would force a constant driver's and passenger's head support with the largest possible contact area of head and neck with headrest, during full vehicle operation cycle, i. e. smooth driving, acceleration, braking, and in particular, when the vehicle is run into from the back.

According to the invention as defined in claim 1, this purpose is fulfilled by a non-stop-active car headrest in the form of a closed container, wherein the container consists of at least one layer, and preferably several elastic layers filled with an elastic filling, preferably elastic air filled balls and/or elastic foam balls. The container is provided with a negative pressure system nozzle. The headrest is characterised in that the container is supported from the back with at least one elastic element, bent out in the direction of passenger's head.

Preferred features of the invention are disclosed in the dependent claims.

The advantage of the solution according to the invention is that thanks to putting it forward, toward driver's or passenger's head, which movement is forced by the elastic element used, for example a spring or a rotary shock-absorber, causing the shape of head to be impressed and preserved, which provides better and more comfortable head support, and the balls inside the headrest allow air between head and headrest. This prevents head chafing during hot season and provides warm feeling during freezing season. Another advantage is that the headrest is constantly in contact with head and neck during regular driving, and particularly, if the car is run into from the back, it prevents cervical backbone injuries. Thanks to the fact that the structure of the headrest can be adjusted with a negative pressure, the structure can be made loose enabling the passenger's head to impress its shape on the headrest. Such a shape can be then preserved and fixed.

The elastic element is preferably in a form of a leaf spring or a rotating shock absorber. The container is preferably filled with granulated plastic in the form of EPS foam balls. The container is preferably ellipsoidal in shape.

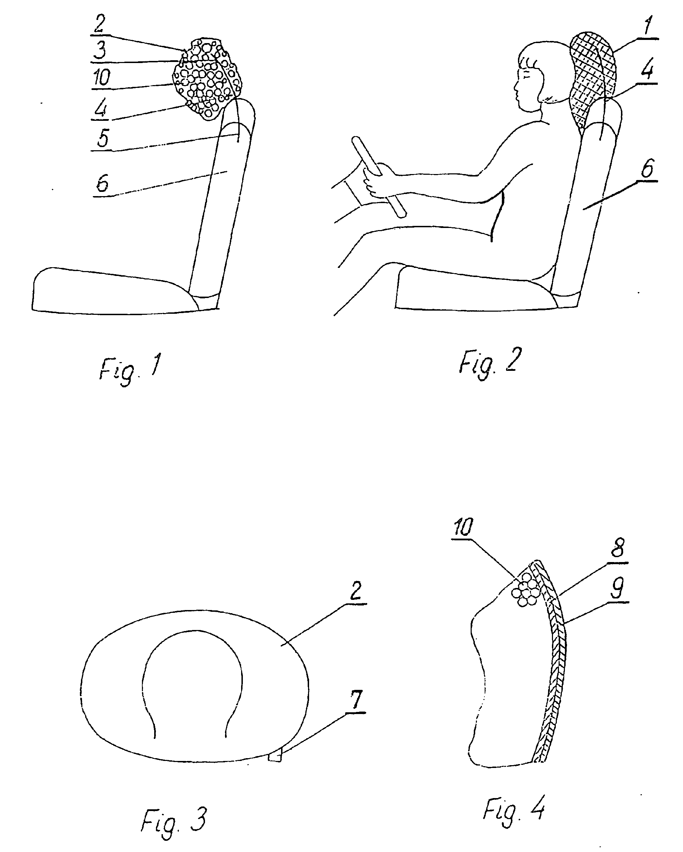

The object of the invention is shown in a sample embodiment drawing, where fig. 1 shows the headrest diagrammatically in end view, in the rest position, when it is attached to an empty car seat ; fig. 2 shows diagrammatically in end view the headrest attached to a car seat occupied by a passenger; fig. 3 shows the headrest in a front view with the head shape impressed; and fig. 4 shows a fragment of the headrest filled with plastic, air-filled balls.

As shown in the drawing, the headrest 1 is formed as a closed container 2, preferably ellipsoidal in shape with one end 3 of an elastic element 4, preferably in a form of a leaf spring or a rotating shock absorber, while the other end 5 is mounted in the car seat 6. The container 2 is provided with a negative pressure system 7. The container 2 consists of at least one layer 8, and preferably several elastic layers 8 and 9, and is filled with elastic filling 10 in the form of elastic, air-filled balls and/or elastic plastic balls. EPS foam balls may be used as the elastic filling.

After taking a seat in vehicle and resting head on the headrest 1, elastic elements 4 in the form of leaf spring or rotating shock absorber, hidden in the back part of the seat backrest 6, push the headrest 1 towards the head. This movement forces the headrest 1 to be pressed against the head, and then turns on the pump, which sucks the excess of air from the container 2 through the negative pressure system nozzle 7. On the headrest 1 and head contact area the shape of the head of the person sitting in the car seat 6 is impressed, and then a shut-off valve is closed. This procedure can be repeated many times for the same person or for different people, even without using the pump, just the pressure caused by the head of the person occupying a seat with a loose headrest 1.

## Claims

1. A non-stop-active car headrest in the form of a closed container,
wherein the container(2) consists of at least one layer (8), and preferably several elastic layers (8, 9) filled with an elastic filling (10), preferably elastic air filled balls and/or elastic foam balls,
and is provided with a negative pressure system nozzle(7) with a shut-off valve,
said headrest being constantly in contact with head and neck during regular driving,
**characterised in**
**that** the container (2) is supported from the back with at least one elastic element (4), bent out in the direction of passenger's head.

2. The headrest according to claim 1, **characterised in that** the elastic element (4) is in the form of a leaf spring.

3. The headrest according to claim 1, **characterised in that** the elastic element (4) is in the form of a rotating shock absorber.

4. The headrest according to claim 1, **characterised in that** the container (2) is filled with granulated plastic in the form of EPS foam balls.

5. The headrest according to claim 1 or 2, **characterised in that** the container (2) is ellipsoidal in shape.

## Patentansprüche

1. Daueraktive Fahrzeug-Kopfstütze in Form eines geschlossenen Behälters,
wobei der Behälter (2) aus wenigstens einer (8) und vorzugsweise aus mehreren elastischen Schichten (8,9) besteht, die mit einer elastischen Füllung (10), vorzugsweise elastischen, luftgefüllten Bällen und/oder elastischen Schaumkugeln, gefüllt ist, und der mit einem Unterdruck-System-Stutzen (7) mit einem Absperrventil versehen ist,
wobei die Fahrzeug-Kopfstütze während des normalen Fahrens dauerhaft mit dem Kopf und dem Nacken des Insassen in Kontakt ist,
**dadurch gekennzeichnet,**
**dass** der Behälter (2) von der Rückseite her durch wenigstens ein elastisches Element (4) gestützt ist, das in Richtung des Insassenkopfes gekrümmt ist.

2. Fahrzeug-Kopfstütze nach Anspruch 1, **dadurch gekennzeichnet, dass** das elastische Element als eine Blattfeder gestaltet ist.

3. Fahrzeug-Kopfstütze nach Anspruch 1, **dadurch gekennzeichnet, dass** das elastische Element als ein Drehstoßdämpfer gestaltet ist.

4. Fahrzeug-Kopfstütze nach Anspruch 1, **dadurch gekennzeichnet, dass** der Behälter (2) mit granuliertem Kunststoff in Form von Polystyrolschaumstoff-Kugeln (EPS-Schaum-Kugeln) gefüllt ist.

5. Fahrzeug-Kopfstütze nach Anspruch 1 oder 2, **dadurch gekennzeichnet, dass** der Behälter (2) eine Ellipsoidform hat.

## Revendications

1. Appui-tête de voiture à action ininterrompue, de la forme d'un contenant fermé,
dans lequel le contenant (2) consiste en au moins une couche (8), et de préférence plusieurs couches élastiques (8, 9) remplies d'une garniture élastique (10), de préférence de billes élastiques remplies d'air et/ou de billes de mousse élastiques, et il est fourni avec un bec (7) de système de pression négative avec valve de fermeture,
ledit appui-tête étant constamment en contact avec la tête et le cou durant la conduite régulière,
**caractérisé en ce que**
le contenant (2) est supporté depuis l'arrière par au moins un élément élastique (4), déplié en direction de la tête du voyageur.

2. Appui-tête selon la revendication 1, **caractérisé en ce que** l'élément élastique (4) présente la forme d'un ressort à lames.

3. Appui-tête selon la revendication 1, **caractérisé en ce que** l'élément élastique (4) présente la forme d'un absorbeur de chocs rotatif.

4. Appui-tête selon la revendication 1, **caractérisé en ce que** le contenant (2) est rempli de plastique granulé sous forme de billes de mousse de polystyrène expansé.

5. Appui-tête selon la revendication 1 ou 2, **caractérisé en ce que** le contenant (2) présente une forme ellipsoïdale.
